# EUROPEAN PATENT SPECIFICATION

(11) **EP 2 249 091 B1**
(45) Date of publication and mention of the grant of the patent: **14.02.2018**
(21) Application number: 09174268.4
(22) Date of filing: 28.10.2009
(51) Int. Cl.: F24F 11/00

(54) **Communication method of air conditioner using refrigerant lines for data transmission**
Kommunikationsverfahren für Klimaanlage zur Nutzung der Kühlmittelleitung zur Datenübertragung
Procédé de communication de climatiseur avec utilisation des lignes de réfrigérant

(30) Priority: 09.02.2009 KR 20090010160
(43) Date of publication of application: 10.11.2010
(73) Proprietor: Samsung Electronics Co., Ltd., Suwon-si, Gyeonggi-do, 443-742 (KR)
(72) Inventor: Kim, Sung Hoon, Gyeonggi-do (KR); Hiroshi, Awata, Gyeonggi-do (KR); Myoung, Kwan Joo, Gyeonggi-do (KR); Choi, Jae Ho, Gyeonggi-do (KR); Jo, Su Ho, Gyeonggi-do (KR)
(74) Representative: Grünecker Patent- und Rechtsanwälte PartG mbB

(56) References cited:
- JP-A- 2006 207 949

## Description

### BACKGROUND

### 1. Field

Embodiments of the present invention relate to a communication method of an air conditioner in which data communications are performed between one or more outdoor units and a plurality of indoor units using refrigerant lines.

### 2. Description of the Related Art

Recently, users have increasingly demanded an air conditioner in which a plurality of indoor units with various shapes and volumes are connected to one or more outdoor units to perform a cooling or heating operation with respect to a place having a number of divided spaces, such as a school, company or hospital.

In general, communications are performed between outdoor units and indoor units using an RS-485 communication system. In this RS-485 communication system, however, the number of communication cables used may increase with an increase in the number of outdoor units and indoor units, thereby making it hard to install and manage the outdoor units and indoor units.

One approach is to perform communications between outdoor units and indoor units by using refrigerant lines as communication media.

However, when the refrigerant lines are installed adjacent to one another, communication signals thereof may interfere with one another because the refrigerant lines are not communication lines. As a result, communication errors may occur.
From JP 2006-207949 an air conditioning network system is known. An outdoor unit composing the air conditioner sends a test frame to each indoor unit, and it identifies a system on the basis of data that had a response. When it is judged that indoor units are connected to a refrigerant pipe of the same system, addresses are set in the indoor units. The system identification is carried out on the basis of a frequency characteristic of a signal transmitted through the refrigerant pipe.

### SUMMARY

Therefore, it is an aspect of the present invention to provide a communication method of an air conditioner using refrigerant lines in which communications are performed over different frequency channels with respect to groups of respective outdoor units.

Additional aspects of the invention will be set forth in part in the description which follows and, in part, will be obvious from the description, or may be learned by practice of the invention.

In accordance with one aspect of the present invention, a communication method of an air conditioner in which data communications are performed between one or more outdoor units and a plurality of indoor units using refrigerant lines includes setting one or more of the indoor units in a group of each of the outdoor units, and performing the data communications over different frequency channels with respect to the respective outdoor unit groups.

The setting may include operating each of the outdoor units, each of the outdoor units sensing temperature variations of the indoor units to detect, from the indoor units, indoor units whose temperature variations exceed a predetermined range, and setting the detected indoor units in the group thereof.

The setting may further include each of the outdoor units requesting the indoor units to transmit temperatures of the indoor units, and each of the indoor units transmitting an address thereof to each of the outdoor units together with the temperature thereof.

The temperatures of the indoor units may be temperatures of indoor heat exchangers.

The performing may include each of the outdoor units requesting the indoor units set in the group thereof to change frequency channels of the set indoor units to a different frequency channel, changing a frequency channel thereof to the different frequency channel, and each of the set indoor units changing the frequency channel thereof to the different frequency channel in response to the request from a corresponding one of the outdoor units.

The method may further include, after the group settings of all the outdoor units are completed, each of the outdoor units changing a frequency channel thereof to a previous frequency channel and calling the indoor units over the changed frequency channel, determining whether an indoor unit answering the call is present among the indoor units, and if the indoor unit answering the call is present, determining that an error has occurred in the indoor unit.

Upon determining that the error has occurred in the indoor unit, each of the outdoor units may control such that an error message is displayed in the indoor unit, so as to inform a user of occurrence of the error in the indoor unit.

In accordance with example, a communication method of an air conditioner in which data communications are performed between one or more outdoor units and a plurality of indoor units using refrigerant lines includes operating each of the outdoor units, each of the outdoor units sensing temperature variations of the indoor units to detect, from the indoor units, indoor units whose temperature variations exceed a predetermined range, and setting the detected indoor units in a group thereof.

The method may further include performing the data communications over different frequency channels with respect to the respective outdoor unit groups.

The performing may include each of the outdoor units requesting the indoor units set in the group thereof to change frequency channels of the set indoor units to a different frequency channel, changing a frequency channel thereof to the different frequency channel, and each of the set indoor units changing the frequency channel thereof to the different frequency channel in response to the request from a corresponding one of the outdoor units.

The method may further include, after the group settings of all the outdoor units are completed, each of the outdoor units changing a frequency channel thereof to a previous frequency channel and calling the indoor units over the changed frequency channel, determining whether an indoor unit answering the call is present among the indoor units, and if the indoor unit answering the call is present, determining that an error has occurred in the indoor unit.

Upon determining that the error has occurred in the indoor unit, each of the outdoor units may control such that an error message is displayed in the indoor unit, so as to inform a user of occurrence of the error in the indoor unit.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a schematic block diagram showing the overall configuration of an air conditioner according to an exemplary embodiment of the present invention;
FIG. 2 is a detailed block diagram of the air conditioner according to the embodiment of the present invention; and
FIG. 3 is a flow chart illustrating a communication process of the air conditioner according to the embodiment of the present invention.

### DETAILED DESCRIPTION

Reference will now be made in detail to the embodiments of the present invention, examples of which are illustrated in the accompanying drawings, wherein like reference numerals refer to like elements throughout.

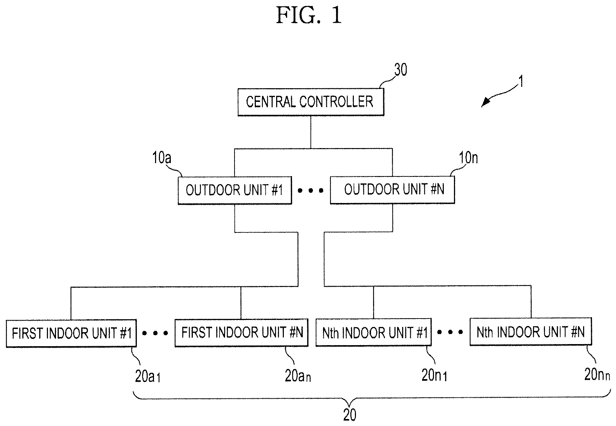

FIG. 1 is a schematic block diagram showing the overall configuration of an air conditioner according to an exemplary embodiment of the present invention. In FIG. 1, the air conditioner, denoted by reference numeral 1, includes one or more outdoor units 10 (10a to 10n), a plurality of indoor units 20 (20a₁ to 20nₙ), and a central controller 30 to centrally control all operations of the outdoor units 10 and indoor units 20.

The outdoor units 10 and the indoor units 20 perform communications therebetween using a refrigerant line-based communication system in such a manner that they transmit and receive various data including status information and control commands therebetween through refrigerant lines.

Here, the refrigerant line-based communication system refers to a system that performs communications by using refrigerant lines interconnecting the outdoor units 10 and the indoor units 20 as communication media, without using separate communication cables.

In a large-scale building, one or more outdoor units 10 are installed depending on the number of indoor units 20 installed, and are connected to the central controller 30. The central controller 30 controls the outdoor units 10 connected thereto, and, in turn, the outdoor units 10 control the indoor units 20. Accordingly, a system manager may centrally control the overall system of the air conditioner 1 by operating the central controller 30.

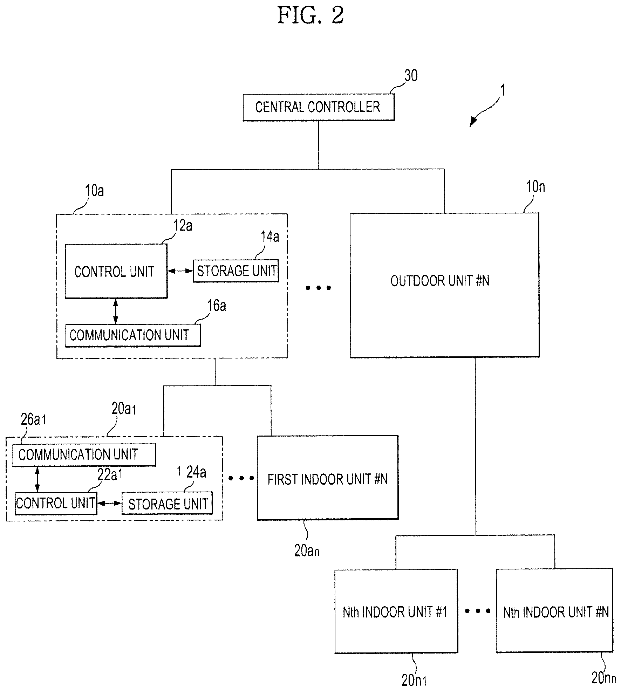

FIG. 2 is a detailed block diagram of the air conditioner according to the embodiment of the present invention.

In FIG. 2, each of the outdoor units 10 and each of the indoor units 20 include, respectively, control units 12 and 22 to control the entire operation of a corresponding one of the outdoor units 10 and the entire operation of a corresponding one of the indoor units 20, storage units 14 and 24 to store information about the corresponding outdoor unit 10 and the corresponding indoor unit 20 and control information for control of the corresponding outdoor unit 10 and the corresponding indoor unit 20, and communication units 16 and 26 to transmit and receive data. Here, it is assumed that the outdoor units 10 and the indoor units 20 communicate using refrigerant lines and the same frequency channel is set for the communications.

Hereinafter, a detailed description will be given of the control unit 12, storage unit 14 and communication unit 16 constituting each outdoor unit 10.

The control unit 12 of each outdoor unit 10 controls the entire operation of the corresponding outdoor unit 10, and has jurisdiction over all communications in the refrigerant line-based communication system.

In more detail, when the outdoor unit 10 starts a cooling operation, the control unit 12 requests the indoor units 20 to transmit the temperatures of the indoor units 20, namely, the temperatures of indoor heat exchangers in the indoor units 20. That is, when the outdoor unit 10 starts the cooling operation, the control unit 12 sends, to indoor units connected to the outdoor unit 10 via refrigerant lines, a broadcast signal requesting the transmission of the temperatures of the indoor units. At this time, the control unit 12 may send the broadcast signal, not only to the indoor units connected to the outdoor unit 10 via the refrigerant lines, but also to indoor units of adjacent refrigerant lines due to communication interference.

The control unit 12 periodically receives the temperatures of the indoor units 20 to sense temperature variations of the indoor units 20. That is, the control unit 12 receives the temperatures of the indoor units 20 and, when a predetermined time has elapsed, receives the temperatures of the indoor units 20 again to sense temperature variations of the indoor units 20.

Then, the control unit 12 detects, from the indoor units 20, indoor units whose temperature variations exceed a predetermined range, and sets the detected indoor units in a group of the corresponding outdoor unit.

In more detail, when any one 10a of the outdoor units 10 (10a to 10n) performs the cooling operation, the indoor units 20a₁ to 20aₙ actually connected to the outdoor unit 10a via refrigerant lines also perform the cooling operation due to the cooling operation by the outdoor unit 10a, thereby causing the temperatures of the indoor heat exchangers in the indoor units 20a₁ to 20aₙ to abruptly fall. Using this phenomenon, the control unit 12 senses the temperature variations of the indoor units 20, namely, the temperature variations of the indoor heat exchangers, and, when indoor units whose temperature variations exceed a predetermined range are present among the indoor units 20, determines those indoor units to be indoor units actually connected to the corresponding outdoor unit and sets those indoor units in a group of the corresponding outdoor unit.

Here, the temperature variation of the indoor unit refers to a difference between the temperature of the indoor heat exchanger of the indoor unit while stopped and the temperature of the indoor heat exchanger of the indoor unit while in the cooling operation, and the predetermined range refers to a reference temperature range for determination as to whether the indoor unit performs the cooling operation.

The control unit 12 requests the indoor units 20a₁ to 20aₙ set in the group of the corresponding outdoor unit to change the frequency channels of the indoor units 20a₁ to 20aₙ to a different frequency channel, and also changes the frequency channel of the corresponding outdoor unit to the different frequency channel. That is, the control unit 12 may prevent a communication error resulting from communication interference by sending, to the indoor units 20a₁ to 20aₙ set in the group of the corresponding outdoor unit, a signal requesting the change of the frequency channels of the indoor units 20a₁ to 20aₙ to a different frequency channel, and also changing the frequency channel of the corresponding outdoor unit to the different frequency channel.

For example, in the case where the frequency channels of the outdoor units 10 and indoor units 20 are set to a "first frequency channel", the control unit 12 sends, to the indoor units 20a₁ to 20aₙ set in the group of the corresponding outdoor unit, a signal requesting the change of the "first frequency channel" to a "second frequency channel", and also changes the frequency channel of the corresponding outdoor unit to the "second frequency channel".

Also, after the group settings of all the outdoor units 10 are completed, the control unit 12 changes the frequency channel of the corresponding outdoor unit to a previous frequency channel, calls the indoor units 20 over the changed frequency channel and determines whether an indoor unit answering the call is present among the indoor units 20. For example, the control unit 12 again changes the frequency channel of the corresponding outdoor unit from the "second frequency channel" to the previous frequency channel, "first frequency channel", calls the indoor units 20 over the "first frequency channel" and determines whether an indoor unit answering the call is present among the indoor units 20. This operation is sequentially performed by all the outdoor units 10a to 10n.

Provided that an indoor unit answering the call is present, the control unit 12 determines that an error has occurred in the indoor unit and controls such that an error message is displayed in the indoor unit, so as to inform the user of the occurrence of the error in the indoor unit. That is, when there is an indoor unit answering the call of the corresponding outdoor unit over the "first frequency channel", the control unit 12 determines that an error has occurred in the indoor unit. This means that the temperature and address of the indoor unit are not correctly delivered to the outdoor units 10 due to the error occurrence and, thus, the indoor unit is not set in a group of any of the outdoor units 10.

In summary, after the group settings of all the outdoor units 10 are completed, each of the outdoor units 10 may also determine whether an error is present in each of the indoor units 20 by changing the frequency channel thereof to a previous frequency channel and sequentially calling the indoor units 20 over the changed frequency channel.

The storage unit 14 of each outdoor unit 10 stores the temperatures of the indoor units 20. Also, the storage unit 14 stores an address list table including addresses of indoor units set in a group of the corresponding outdoor unit.

This storage unit 14 is a storage medium capable of storing the temperatures of the indoor units and the address list table, such as a Dynamic Random Access Memory (DRAM), Synchronous DRAM (SDRAM), Rambus DRAM (RDRAM), Double data rate DRAM (DDRAM) or Static Random Access Memory (SRAM).

The communication unit 16 of each outdoor unit 10 receives data transmitted from the indoor units 20 through refrigerant lines.

Hereinafter, a detailed description will be given of the control unit 22, storage unit 24 and communication unit 26 constituting each indoor unit 20.

The control unit 22 of each indoor unit 20 controls the entire operation of the corresponding indoor unit, and transmits a temperature sensed by an indoor heat exchanger temperature sensor to a certain one of the outdoor units 10 upon receiving, from the certain outdoor unit, a broadcast signal requesting the transmission of the temperature of the indoor unit, namely, the temperature of an indoor heat exchanger in the indoor unit. At this time, the control unit 22 transmits the address of the indoor unit, as well as the temperature of the indoor unit.

Also, when the outdoor unit requests the indoor unit to change the frequency channel of the indoor unit to a different frequency channel, the control unit 22 changes the frequency channel of the indoor unit to the different frequency channel in response to the request from the outdoor unit.

For example, assume that the frequency channels of the outdoor units 10 and indoor units 20 are set to a "first frequency channel". When the outdoor unit 10a sends a signal requesting the change of the "first frequency channel" to a "second frequency channel" to the indoor units 20a₁ to 20aₙ, the control unit 22 of each of the indoor units 20a₁ to 20aₙ changes the frequency channel of the corresponding indoor unit to the "second frequency channel".

Also, when the certain outdoor unit sends a signal requesting the display of an error message, the control unit 22 displays the error message through a display unit to inform the user of the occurrence of an error. For example, when the outdoor unit sends the signal requesting the display of the error message, the control unit 22 displays the error message, for example, "An error has occurred in the indoor unit. Call the nearest service center." through the display unit to inform the user of the occurrence of the error in the indoor unit.

The storage unit 24 of each indoor unit 20 stores the temperature of the indoor heat exchanger in the corresponding indoor unit and the address of the indoor unit. That is, the storage unit 20 stores the temperature of the indoor heat exchanger sensed by the indoor heat exchanger temperature sensor so that the temperature of the indoor heat exchanger may be transmitted to the certain outdoor unit through the communication unit 26.

The communication unit 26 of each indoor unit 20 functions to receive signals from the certain outdoor unit or transmit data of the corresponding indoor unit.

On the other hand, although the present embodiment has been applied to communications between one or more outdoor units and a plurality of indoor units, it may also be applied to communications between devices such as a refrigerant distributor and a central controller.

Hereinafter, a communication process of the air conditioner with the above-stated configuration will be described.

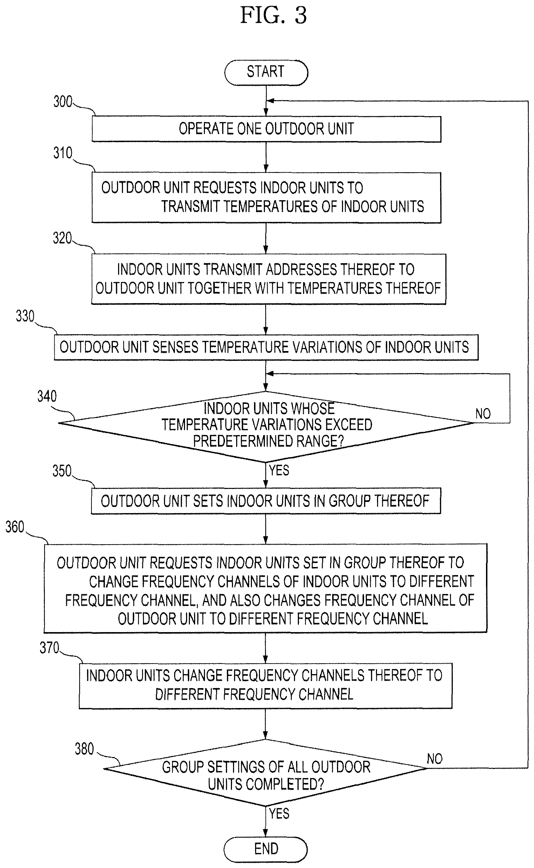

FIG. 3 is a flow chart illustrating the communication process of the air conditioner according to the embodiment of the present invention.

Referring to FIG. 3, any one 10a of the outdoor units 10 performs the cooling operation under the condition that the outdoor units 10 and the indoor units 20 communicate using refrigerant lines, they all are powered on and the same frequency channel is set for the communications (300).

Upon starting the cooling operation, the outdoor unit 10a requests the indoor units 20 to transmit the temperatures of the indoor units 20 over the frequency channel (310). That is, the outdoor unit 10a sends a broadcast signal requesting the transmission of the temperatures of the indoor units 20 to the indoor units 20. At this time, the outdoor unit 10a may send the broadcast signal, not only to indoor units connected to the outdoor unit 10a via refrigerant lines, but also to indoor units of adjacent refrigerant lines due to communication interference.

While the cooling operation is advanced, the indoor units 20 transmit the addresses thereof to the outdoor unit 10a together with the temperatures thereof (320).

Then, the outdoor unit 10a checks the temperatures of the indoor units 20 transmitted from the indoor units 20 and, when a predetermined time has elapsed, checks the temperatures of the indoor units 20 again to sense temperature variations of the indoor units 20 (330).

After operation 330 is performed, the outdoor unit 10a determines whether there are indoor units whose temperature variations exceed a predetermined range (340).

If it is determined in operation 340 that there are indoor units whose temperature variations exceed the predetermined range, the outdoor unit 10a sets those indoor units 20a₁ to 20aₙ in a group thereof (350).

That is, because only the temperatures of indoor heat exchangers in indoor units actually connected to the outdoor unit 10a via refrigerant lines abruptly fall, the outdoor unit 10a senses the temperature variations of the indoor units 20 to detect, from the indoor units 20, the indoor units 20a₁ to 20aₙ actually connected to the outdoor unit 10a via the refrigerant lines, and sets the detected indoor units 20a₁ to 20aₙ in a group of the outdoor unit 10a. Then, the outdoor unit 10a requests the indoor units 20a₁ to 20aₙ set in the group thereof to change the frequency channels of the indoor units 20a₁ to 20aₙ to a different frequency channel, and also changes the frequency channel of the outdoor unit 10a to the different frequency channel (360).

Then, the indoor units 20a₁ to 20aₙ change the frequency channels thereof to the different frequency channel (370). As a result, the group setting of the outdoor unit 10a is completed.

Thereafter, a determination is made as to whether the group settings of all the outdoor units 10a to 10n have been completed (380). If the group settings of all the outdoor units 10a to 10n have been completed ('Yes' in operation 380), the process is ended. However, if the group settings of all the outdoor units 10a to 10n have not been completed ('No' in operation 380), the process returns to operation 300 to perform the cooling operation of any one outdoor unit, and then repeats the above-stated operations.

On the other hand, after the group settings of all the outdoor units 10a to 10n are completed, each outdoor unit 10 changes the frequency channel thereof to a previous frequency channel, sequentially calls the indoor units 20 over the changed frequency channel and determines whether an indoor unit answering the call is present among the indoor units 20. This operation is sequentially performed by all the outdoor units 10a to 10n.

Provided that an indoor unit answering the call is present, each outdoor unit 10 sends a signal requesting the display of an error message to the indoor unit, so as to inform the user of the occurrence of an error in the indoor unit.

As is apparent from the above description, in a communication method of an air conditioner according to an embodiment of the present invention, indoor units are set in groups of outdoor units using temperature variations of the indoor units, and communications are performed over different frequency channels with respect to the respective outdoor unit groups, thereby preventing a communication error resulting from communication interference.

Further, in addition to the group settings of the outdoor units, it may be possible to determine the presence/absence of errors in the indoor units.

Although a few embodiments of the present invention have been shown and described, it would be appreciated by those skilled in the art that changes may be made in these embodiments without departing from the scope of the invention as defined in the appended claims.

## Claims

1. A communication method of an air conditioner (1) in which data communications are performed between one or more outdoor units (10) and a plurality of indoor units (20) using refrigerant lines, the method comprising:
setting one or more of the indoor units (20) in a group of each of the outdoor units (10); and
performing the data communications over different frequency channels with respect to the respective outdoor unit groups.

2. The communication method according to claim 1, wherein the setting comprises:
operating each of the outdoor units (10);
each of the outdoor units (10) sensing temperature variations of the indoor units (20) to detect, from the indoor units (20), indoor units whose temperature variations exceed a predetermined range; and
setting the detected indoor units in the group thereof.

3. The communication method according to claim 2, wherein the setting further comprises:
each of the outdoor units (10) requesting the indoor units (20) to transmit temperatures of the indoor units (20); and
each of the indoor units (20) transmitting an address thereof to each of the outdoor units (10) together with the temperature thereof.

4. The communication method according to claim 3, wherein the temperatures of the indoor units (20) are temperatures of indoor heat exchangers.

5. The communication method according to claim 1, wherein the performing comprises:
each of the outdoor units (10) requesting the indoor units set in the group thereof to change frequency channels of the set indoor units to a different frequency channel;
changing a frequency channel thereof to the different frequency channel; and
each of the set indoor units changing the frequency channel thereof to the different frequency channel in response to the request from a corresponding one of the outdoor units.

6. The communication method according to claim 1, further comprising:
after the group settings of all the outdoor units are completed, each of the outdoor units changing a frequency channel thereof to a previous frequency channel and calling the indoor units over the changed frequency channel;
determining whether an indoor unit answering the call is present among the indoor units; and
if the indoor unit answering the call is present, determining that an error has occurred in the indoor unit.

7. The communication method according to claim 6, wherein, upon determining that the error has occurred in the indoor unit, each of the outdoor units controls such that an error message is displayed in the indoor unit, so as to inform a user of occurrence of the error in the indoor unit.

## Patentansprüche

1. Kommunikationsverfahren einer Klimaanlage (1), in dem Datenkommunikationen zwischen einer oder mehr Außeneinheiten (10) und einer Vielzahl von Inneneinheiten (20) mittels Kältemittelleitungen durchgeführt werden, wobei das Verfahren umfasst:
Einstellen von einer oder mehr Inneneinheiten (20) in einer Gruppe von jeder der Außeneinheiten (10); und
Durchführen der Datenkommunikationen über unterschiedliche Frequenzkanäle mit Bezug auf die jeweiligen Außeneinheitsgruppen.

2. Kommunikationsverfahren nach Anspruch 1, wobei das Einstellen umfasst:
Betreiben von jeder der Außeneinheiten (10);
wobei jede der Außeneinheiten (10) Temperaturschwankungen der Inneneinheiten (20) erfasst, um von den Inneneinheiten (20) Inneneinheiten zu detektieren, deren Temperaturschwankungen einen vorgegebenen Bereich überschreiten; und
Einstellen der detektierten Inneneinheiten in deren Gruppe.

3. Kommunikationsverfahren nach Anspruch 2, wobei das Einstellen des Weiteren umfasst:
jede der Außeneinheiten (10) Auffordern der Inneneinheiten (20), Temperaturen der Inneneinheiten (20) zu senden; und
jede der Inneneinheiten (20) Senden einer Adresse davon an jede der Außeneinheiten (10) zusammen mit deren Temperatur.

4. Kommunikationsverfahren nach Anspruch 3, wobei die Temperaturen der Inneneinheiten (20) Temperaturen von Innenwärmetauschern sind.

5. Kommunikationsverfahren nach Anspruch 1, wobei das Durchführen umfasst:
jede der Außeneinheiten (10) Auffordern der in der Gruppe davon eingestellten Inneneinheiten, Frequenzkanäle der eingestellten Inneneinheiten auf einen anderen Frequenzkanal zu ändern;
Ändern eines Frequenzkanals davon auf den anderen Frequenzkanal; und
jede der eingestellten Inneneinheiten Ändern des Frequenzkanals davon auf den anderen Frequenzkanal in Reaktion auf die Aufforderung von einer entsprechenden der Außeneinheiten.

6. Kommunikationsverfahren nach Anspruch 1, das des Weiteren umfasst:
nachdem die Gruppeneinstellungen aller Außeneinheiten abgeschlossen sind, jede der Außeneinheiten Ändern eines Frequenzkanals davon auf einen vorherigen Frequenzkanal und Rufen der Inneneinheiten über den geänderten Frequenzkanal;
Bestimmen, ob eine den Anruf beantwortende Inneneinheit unter den Inneneinheiten vorhanden ist; und
wenn die den Anruf beantwortende Inneneinheit vorhanden ist, Bestimmen, dass ein Fehler in der Inneneinheit aufgetreten ist.

7. Kommunikationsverfahren nach Anspruch 6, wobei beim Bestimmen, dass der Fehler in der Inneneinheit aufgetreten ist, jede der Außeneinheiten derart steuert, dass eine Fehlermeldung in der Inneneinheit angezeigt wird, um so einen Benutzer über das Auftreten des Fehlers in der Inneneinheit zu informieren.

## Revendications

1. Procédé de communication d'un climatiseur (1) dans lequel des communications de données sont mises en oeuvre entre une ou plusieurs unités extérieures (10) et une pluralité d'unités intérieures (20) en utilisant des lignes de réfrigérant, le procédé comprenant :
la configuration d'une ou plusieurs desdites unités intérieures (20) dans un groupe de chacune desdites unités extérieures (10) ; et
la mise en oeuvre des communications de données via différents canaux de fréquence par rapport aux groupes d'unité extérieure respectifs.

2. Procédé de communication selon la revendication 1, dans lequel la configuration comprend :
la commande de chacune desdites unités extérieures (10) ;
chacune des unités extérieures (10) détectant des variations de température des unités intérieures (20) pour détecter, à partir des unités intérieures (20), des unités intérieures dont les variations de température sortent d'une plage prédéterminée ; et
la configuration des unités intérieures détectées dans le groupe correspondant.

3. Procédé de communication selon la revendication 2, dans lequel la configuration comprend en outre :
la demande par chacune des unités extérieures (10) aux unités intérieures (20) de transmettre des températures des unités intérieures (20) ; et
la transmission par chacune des unités intérieures (20) d'une adresse correspondante à chacune des unités extérieures (10) conjointement à la température correspondante.

4. Procédé de communication selon la revendication 3, dans lequel les températures des unités intérieures (20) sont des températures d'échangeurs de chaleur intérieurs.

5. Procédé de communication selon la revendication 1, dans lequel la mise en oeuvre comprend :
la demande par chacune des unités extérieures (10) aux unités intérieures configurées dans le groupe correspondant de changer les canaux de fréquence des unités intérieures configurées à un canal de fréquence différent ;
le changement d'un canal de fréquence correspondant au canal de fréquence différent ; et
le changement par chacune des unités intérieures configurées du canal de fréquence correspondant au canal de fréquence différent en réponse à la demande d'une unité correspondante parmi lesdites unités extérieures.

6. Procédé de communication selon la revendication 1, comprenant en outre :
après que les configurations de groupe de toutes les unités extérieures sont achevées, le changement d'un canal de fréquence correspondant à un canal de fréquence antérieur et l'appel des unités intérieures via le canal de fréquence changé, par chacune des unités extérieures ;
la détermination du fait qu'une unité intérieure répondant à l'appel est présente ou non parmi les unités intérieures ; et
si l'unité intérieure répondant à l'appel est présente, la détermination du fait qu'une erreur s'est produite dans l'unité intérieure.

7. Procédé de communication selon la revendication 6 dans lequel, lors de la détermination du fait que l'erreur s'est produite dans l'unité intérieure, chacune des unités extérieures effectue une commande de telle sorte qu'un message d'erreur est affiché sur l'unité intérieure, de manière à informer un utilisateur de l'occurrence de l'erreur dans l'unité intérieure.
